# EUROPÄISCHE PATENTSCHRIFT

(11) **EP 3 670 984 B1**
(45) Veröffentlichungstag und Bekanntmachung des Hinweises auf die Patenterteilung: **09.03.2022**
(21) Anmeldenummer: 19218070.1
(22) Anmeldetag: 19.12.2019
(51) Int. Cl.: F16L 3/00, B65G 53/46, B65G 53/54, F16L 33/28, F16L 41/08

(54) **VORRICHTUNG ZUR VERÄNDERUNG EINES SCHÜTTGUTFLUSSES, INSBESONDERE DOSIERVORRICHTUNG UND VORRICHTUNG ZUR VERBINDUNG VON ROHRLEITUNGEN**
DEVICE FOR CHANGING A FLOW OF BULK MATERIAL, IN PARTICULAR A DOSING DEVICE AND DEVICE FOR CONNECTING PIPELINES
DISPOSITIF DE MODIFICATION D'UN FLUX DE PRODUIT EN VRAC, EN PARTICULIER DISPOSITIF DE DOSAGE ET DISPOSITIF DE RACCORDEMENT DE CONDUITES

(30) Priorität: 21.12.2018 DE 102018222900; 29.01.2019 DE 102019102225
(43) Veröffentlichungstag der Anmeldung: 24.06.2020
(73) Patentinhaber: Hecht Technologie GmbH, 85276 Pfaffenhofen (DE)
(72) Erfinder: Schwaiger, Thomas, 85276 Pfaffenhofen (DE)
(74) Vertreter: Kilian Kilian & Partner

(56) Entgegenhaltungen:
- EP-A1- 0 300 113
- WO-A1-2013/044403
- DE-A1- 4 432 562

## Beschreibung

Die vorliegende Erfindung betrifft eine Vorrichtung zur Veränderung eines durch einen flexiblen Schlauch strömenden Flusses eines Schüttgutes, insbesondere eine Dosiervorrichtung zur Veränderung des genannten Flusses, und weiterhin allgemein eine Vorrichtung zur Verbindung von Rohrleitungen, in denen der Fluss des Schüttgutes fließt.

Industriell eingesetzte Dosiervorrichtungen sind allgemein bekannt und werden beispielsweise in Produktionsanlagen installiert, in denen ein Schüttgut zur Weiterverarbeitung oder Abfüllung strömt. Die Installation erfolgt in der Regel in der Weise, dass Rohrleitungen der Produktionsanlage an die Dosiervorrichtung angeschlossen werden und das Schüttgut anschließend durch einen flexiblen Schlauch der Dosiervorrichtung strömt. Quetschorgane der Dosiervorrichtung wirken auf den flexiblen Schlauch, derart, dass sie den flexiblen Schlauch elastisch verformen und damit eine Dosierung des Schüttgutes bewirken.

Das Dokument EP 0 300 113 A1 offenbart eine Einschleusvorrichtung für im Wesentlichen trockenkörnige, schüttfähige Materialien, insbesondere für im Wesentlichen trockenes Betongemisch. Die Einschleusvorrichtung umfasst einen flexiblen Schlauch sowie eine obere und eine untere Schlauchquetscheinrichtung. Die Schlauchquetscheinrichtungen sind jeweils mittels eines pneumatischen Arbeitszylinders betätig bar.

Ferner ist aus dem Dokument DE 44 32 562 A1, das auf einem zu dem technischen Gebiet der Erfindung weit entfernten technischen Gebiet liegt, eine Schnellverbindungsschwenkkopplung zur Befestigung eines Paares von Kühlmittelleitungen einer Klimaanlage eines Automobils bekannt. Darüber hinaus ist aus dem Dokument WO 2013/044403 A1, das ebenfalls auf einem zu dem technischen Gebiet der Erfindung
weit entfernten technischen Gebiet liegt, eine Steckkupplung für fluidführende Schläuche oder für elektrische Leitungen bekannt.

Die Auswechslung des flexiblen Schlauches ist bei den bekannten Dosiervorrichtungen aufwendig. Der flexible Schlauch ist in der Regel an außerhalb eines Gehäuses der Dosiervorrichtung gelegenen Befestigungsstrukturen mittels Schraubverbindungen befestigt, die es erforderlich machen, dass zur Auswechslung des flexiblen Schlauches diese Schraubverbindungen nach Installation der Dosiervorrichtung zugänglich bleiben. Außerdem müssen bei Auswechseln des flexiblen Schlauches eine Vielzahl von die Befestigungsstrukturen bildenden Elemente vollständig gelöst und anschließend wieder befestigt werden. Ein einfaches benutzerfreundliches Spannen des flexiblen Schlauches ermöglichen die Befestigungsstrukturen zudem nicht.

All dies macht das Auswechseln des flexiblen Schlauches für einen Anwender aufwendig und zeitintensiv. An diesem Punkt setzt die Erfindung an.

Aufgabe der Erfindung ist es, eine Vorrichtung zur Veränderung eines bei bestimmungsgemäßem Gebrauch durch einen flexiblen Schlauch strömenden Flusses eines Schüttgutes, insbesondere eine Dosiervorrichtung, zu schaffen, die eine leichte und einfache Auswechslung des flexiblen Schlauches ermöglicht.

Diese Aufgabe wird mit einer Vorrichtung gemäß Patentanspruch 1 gelöst. Vorteilhafte Ausführungsformen der Erfindung sind Gegenstand der abhängigen Patentansprüchen.

Eine erfindungsgemäße Vorrichtung zur Veränderung eines bei bestimmungsgemäßem Gebrauch durch einen flexiblen Schlauch strömenden Flusses eines Schüttgutes weist insbesondere auf:
- eine Befestigungseinrichtung zur Befestigung des flexiblen Schlauches; und
- eine Verformungseinrichtung, die derart angeordnet und betätigbar ist, dass sie zu der Veränderung des in einer Richtung einer Längsachse des flexiblen Schlauches strömenden Flusses des Schüttgutes den flexiblen Schlauch radial zu der Längsachse verformt;
wobei
die Befestigungseinrichtung ein verstellbares Klemmelement beinhaltet, das den flexiblen Schlauch um die Längsachse herum umläuft und einen zu der Längsachse radial verlaufenden Durchbruch aufweist;
durch ein Verstellen des Klemmelements der flexible Schlauch (i) an eine eine Öffnung festlegende Oberfläche der Vorrichtung derart dichtend angedrückt werden kann bzw. wird, dass der Fluss des Schüttgutes durch die Öffnung strömen kann/strömt, und (ii) anschließend durch ein Rückverstellen des Klemmelements von der Öffnung wieder gelöst werden kann/wird; und
nach Lösen des flexiblen Schlauches von der Oberfläche der flexible Schlauch entfernt werden kann, indem er radial zu der Längsachse durch den Durchbruch gezogen werden kann bzw. wird.

Der flexible Schlauch ist beispielsweise aus einem Elastomer ausgebildet.

Bei dem Schüttgut kann es sich beispielsweise um ein pulver- oder granulatartiges Schüttgut handeln.

Der Durchbruch des Klemmelementes kann allgemein ein offener Bereich sein oder auch dadurch gebildet sein, dass ein Teil des Klemmelements gelöst oder um ein Gelenkt zum Öffnen des Durchbruches gedreht werden kann.

Bevorzugt ist die erfindungsgemäße Vorrichtung so ausgestaltet, dass die Befestigungseinrichtung einen den flexiblen Schlauch umlaufenden Trägerring beinhaltet, an dem der flexible Schlauch befestigt ist und an dem das Klemmelement, bevorzugt unmittelbar, anliegt; und
das Klemmelement bei dem Verstellen den flexiblen Schlauch über den Trägerring an die Oberfläche andrückt.

Der Trägerring ist bevorzugt ein vollständig geschlossener Ring.

Bevorzugt ist bei der erfindungsgemäßen Vorrichtung der flexible Schlauch über den Trägerring derart geschlagen, dass eine in Richtung der Oberfläche weisende Stirnseite des Trägerrings an dem flexiblen Schlauch anliegt; wobei
das Klemmelement, bevorzugt unmittelbar, an einer der Stirnseite abgewandten Stirnseite des Trägerrings anliegt; und
das Klemmelement bei dem Verstellen derart auf den Trägerring wirkt, dass die Stirnseite den flexiblen Schlauch an die Oberfläche drückt.

Bevorzugt ist bei der erfindungsgemäßen Vorrichtung der flexible Schlauch an dem Trägerring befestigt ist, indem der über den Trägerring geschlagene Teil des flexiblen Schlauches durch ein Spannmittel an eine in Bezug auf die Längsachse radial nach außen weisende Fläche des Trägerrings gedrückt wird.

Das Spannmittel kann beispielweise ein Spannband sein, das bevorzugt mittels einer Spannschraube in seiner Länge derart veränderbar ist, dass es den flexiblen Schlauch an den Trägerring drückt.

Das Klemmelement und der Trägerring der erfindungsgemäßen Vorrichtung weisen bevorzugt Formschlussstrukturen auf, die derart angeordnet sind, dass nach ineinander Einsetzen der Formschlussstrukturen der flexible Schlauch und die Öffnung zueinander zentriert sind.

Bevorzugt sind der flexible Schlauch und die Öffnung koaxial zueinander ausgerichtet.

Bevorzugt sind bei der erfindungsgemäßen Vorrichtung der flexible Schlauch und ein die Öffnung festlegender Rand der Oberfläche miteinander bündig, wenn die Formschlussstrukturen ineinander eingreifen bzw. eingesetzt sind und der flexible Schlauch durch das Verstellen an die Oberfläche angedrückt ist.

Bevorzugt umläuft bei der erfindungsgemäßen Vorrichtung das Klemmelement den flexiblen Schlauch um die Längsachse herum über eine Länge, die größer ist als eine halbe Umfangslänge des flexiblen Schlauches.

Bevorzugt ist bei der erfindungsgemäßen Vorrichtung eine Abmessung des in dem Klemmelement gebildeten Durchbruchs in Bezug auf den Umfang des flexiblen Schlauchs kleiner als 1/2, 1/3, 1/4, 1/5, 1/6, 1/7, 1/8 oder 1/9 des Umfangs des flexiblen Schlauchs.

Bevorzugt ist bei der erfindungsgemäßen Vorrichtung das Klemmelement eine Klemmplatte, die als die Formschlussstrukturen eine in Richtung der Öffnung weisende, den flexiblen Schlauch umlaufende Nut aufweist, in die der Trägerring eingesetzt ist.

Bevorzugt beinhaltet bei der erfindungsgemäßen Vorrichtung die Befestigungseinrichtung eine Verstelleinrichtung zu dem Verstellen des Klemmelements, und kann die Verstelleinrichtung durch einen Anwender derart betätigt werden, dass der flexible Schlauch an die Oberfläche gedrückt oder von dieser gelöst wird.

Bevorzugt wird bei der erfindungsgemäßen Vorrichtung durch das Betätigen der Verstelleinrichtung das Klemmelement in Richtung der Längsachse versetzt.

Bevorzugt weist bei der erfindungsgemäßen Vorrichtung die Verstelleinrichtung eine Vielzahl voneinander unabhängig betätigbare Verstellelemente auf.

Die Verstellelemente können beispielsweise Spannschrauben oder verstellbare Druckluftzylinder sein.

Weiterhin bevorzugt weist die erfindungsgemäße Vorrichtung weiterhin auf:
ein Gehäuse, in dem der flexible Schlauch und die Befestigungseinrichtung angeordnet sind; wobei
die Oberfläche eine in einen Innenraum des Gehäuses weisende Oberfläche ist und die Öffnung eine die in den Innenraum weisende Oberfläche festlegende Gehäusewand nach Außen durchläuft; und
die Befestigungseinrichtung die Verstelleinrichtung aufweist, die bestimmungsgemäß in dem Innenraum des Gehäuses durch den Anwender betätigt wird.

Bevorzugt weist die Vorrichtung weiterhin auf:
eine weitere Befestigungseinrichtung, die in dem Innenraum des Gehäuses an einer weiteren, der Oberfläche des Gehäuses gegenüberliegenden Oberfläche angeordnet ist, wobei der flexible Schlauch an der weiteren Befestigungseinrichtung derart befestigt werden kann, dass der Fluss des Schüttgutes durch eine weitere, durch die gegenüberliegende Oberfläche festgelegte Öffnung strömen kann; wobei
die Länge des flexiblen Schlauches so bemessen ist, dass er, wenn das Klemmelement den flexiblen Schlauch an die Oberfläche drückt, zwischen der Befestigungseinrichtung und der weiteren Befestigungseinrichtung in dem Innenraum gespannt ist.

Bevorzugt ist bei der erfindungsgemäßen Vorrichtung das Gehäuse zum Entfernen des flexiblen Schlauches von einer Seite aus für den Anwender zugänglich, wobei der Durchbruch des Klemmelements in Richtung der Seite weist.

Bevorzugt sind bei der erfindungsgemäßen Vorrichtung die Befestigungseinrichtung und die weitere Befestigungseinrichtung gleich und/oder identisch ausgebildet.

Im Folgenden wird eine bevorzugte Ausführungsform der Erfindung anhand der beigefügten Figuren erläutert.
Figur 1 zeigt eine erfindungsgemäße Dosiervorrichtung in einer Vorderseitenansicht;
Figur 2 zeigt eine vergrößerte Darstellung der erfindungsgemäßen Dosiervorrichtung aus Figur 1, wobei eine die Vorderseite der erfindungsgemäßen Dosiervorrichtung verschließende Abdeckung entfernt ist;
Figur 3a zeigt eine Schnittansicht der erfindungsgemäßen Dosiervorrichtung aus Figur 1, wobei Figur 3b eine Lage der Schnittebene in Bezug auf eine gezeigte Y-Achse verdeutlicht;
Figur 4a zeigt eine perspektivische, vergrößerte Ansicht der erfindungsgemäßen Dosiervorrichtung, wobei die Vorderseite geöffnet ist;
Figur 4b zeigt eine Schnittansicht der in Figur 4a gezeigten perspektivischen Ansicht, wobei Figur 4c die Lage der Schnittebene in Bezug auf die Y-Achse verdeutlicht;
Figur 5a zeigt eine Draufsicht eines Klemmelements der erfindungsgemäßen Dosiervorrichtung;
Figur 5b zeigt eine perspektivische Ansicht eines Trägerrings der erfindungsgemäßen Dosiervorrichtung;
Figuren 6a bis 6g zeigen Darstellungen der Befestigungseinrichtungen der erfindungsgemäßen Dosiervorrichtung, über die ein flexibler Schlauch befestigt werden kann, wobei die Darstellungen verdeutlichen, dass die entsprechenden Elemente losgelöst von einer Dosiervorrichtung betrachtet werden können.

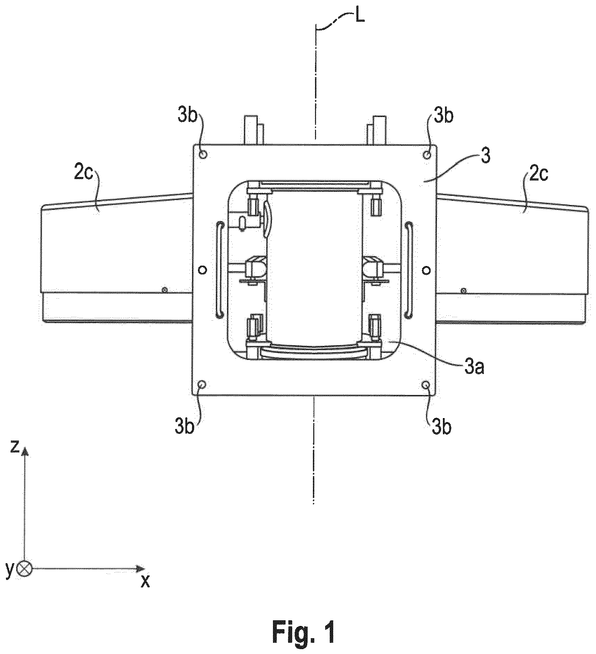

Figur 1 zeigt eine erfindungsgemäße Dosiervorrichtung 1 in einer Vorderseitenansicht.

Eine X-Achse des in Figur 1 gezeigten Koordinatensystems entspricht der Breitenrichtung der Dosiervorrichtung 1, eine Z-Achse des Koordinatensystems der Höhenrichtung der Dosiervorrichtung 1, und eine Y-Achse der Tiefenrichtung der Dosiervorrichtung 1.

Die Dosiervorrichtung 1 beinhaltet ein Gehäuse 2, das auf seiner Vorderseite bevorzugt durch eine Abdeckung 3 verschlossen ist. Die Abdeckung 3 ist optional mit einem Sichtfenster 3a ausgestattet, durch das hindurch ein Anwender einen Innenraum 2a der Dosiervorrichtung 1 einsehen kann.

Die Vorderseite der Dosiervorrichtung 1 entspricht einer Seite, von der aus der Innenraum 2a der Dosiervorrichtung 1 für den Anwender zugänglich ist. Hierfür ist die Abdeckung 3 lösbar an dem Gehäuse 2 befestigt, beispielsweise mittels Schraubverbindungen 3b. Alternativ hierzu kann die Abdeckung 3 mittels Bänder schwenkbar an dem Gehäuse 2 befestigt sein, sodass der Anwender den Innenraum 2a öffnen kann, ohne die Abdeckung 3 vollständig von dem Gehäuse 2 lösen zu müssen. Eine entsprechende Schwenkachse, um die die Abdeckung 3 schwenkbar ist, kann in Figur 1 entweder in X-Richtung oder Z-Richtung verlaufen.

Die Dosiervorrichtung 1 wird bestimmungsgemäß so in eine in Figur 1 nicht gezeigte Anlage installiert, dass ein in der Anlage durch beispielsweise Rohrleitungen strömender Fluss eines Schüttgutes durch die Dosiervorrichtung 1, wie es im Folgenden noch beschrieben werden wird, verläuft. Hierfür sind auf der Außenseite des Gehäuses 2 Anschlusselemente vorgesehen, über die die Dosiervorrichtung 1 an die Rohrleitungen angeschlossen werden kann. Die Anschlusselemente sind beispielsweise jeweils als Anschlussflansch 2b ausgebildet, an den eine der Rohrleitungen über eine Schelle angeschlossen werden kann.

Die Abmessungen der Dosiervorrichtung 1 sind allgemein beliebig und bemessen sich beispielsweise nach den Abmessungen der Anlage, in die die Dosiervorrichtung zu installieren ist. Die Abmessungen (Höhe/Breite/Tiefe) des Gehäuses 2 der in Figur 1 gezeigten Dosiervorrichtung betragen beispielsweise jeweils ungefähr 1m. Diese Abmessungen sind wie erwähnt reine Beispiele, auf die die Erfindung nicht beschränkt ist.

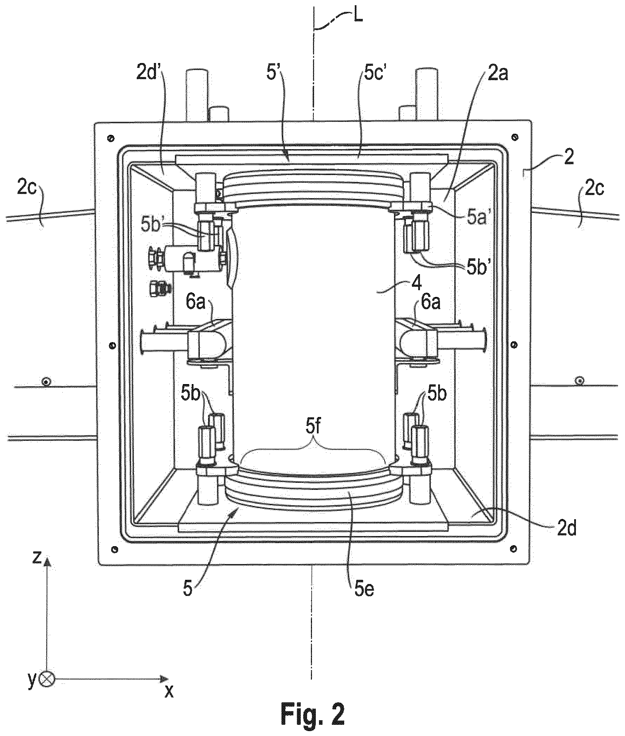

Figur 2 zeigt die Dosiervorrichtung, wie Figur 1, von vorne bzw. in der Vorderseitenansicht, wobei die Abdeckung 3 entfernt ist.

In dem Innenraum 2a befindet sich ein flexibler Schlauch 4, der von einer in den Innenraum 2a weisenden Oberfläche 2d zu einer, wiederum in den Innenraum 2a weisenden, weiteren Oberfläche 2d' verläuft. Die genannten in den Innenraum 2a weisenden Oberflächen sind in Figur 2 die Bodenoberfläche bzw. Deckenoberfläche der entsprechenden Seitenwände des Gehäuses 2.

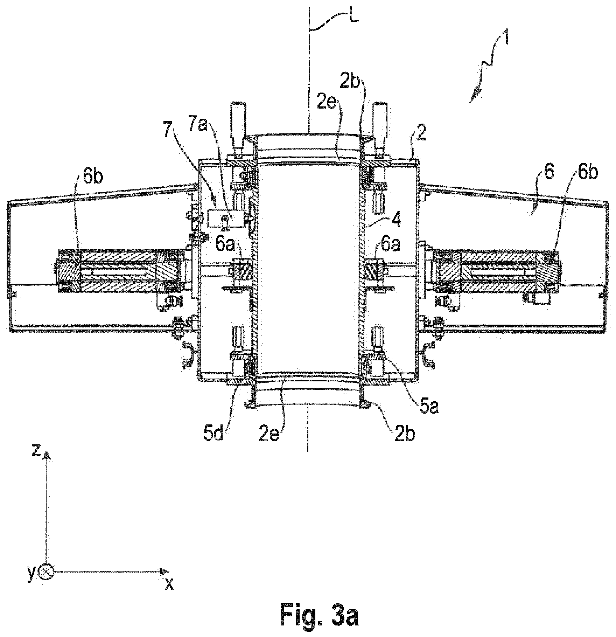

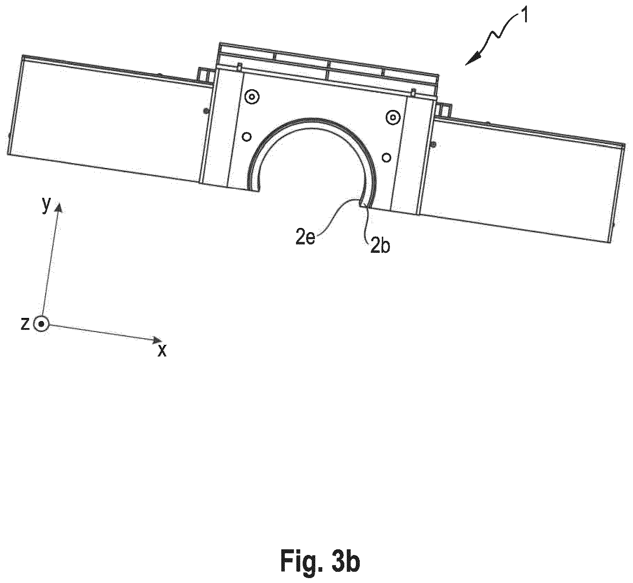

Figuren 3a zeigt eine Schnittansicht der Dosiervorrichtung 1 von vorne bzw. in der Vorderseitenansicht. Die Schnittebene der Schnittansicht entspricht der X-Z-Ebene des in Figur 3a gezeigten Koordinatensystems. Die Position der Schnittebene in Bezug auf die Y-Achse veranschaulicht Figur 3b, die die Schnittansicht gemäß Figur 3a der Dosiervorrichtung 1 von oben zeigt.

Seitenwände (Bodenwand/Deckenwand) des Gehäuses 2, die sich in Z-Richtung befinden und in dem Innenraum 2a des Gehäuses 2 die jeweiligen in den Innenraum 2a weisenden Oberflächen definieren, weisen jeweils eine Öffnung 2e auf, die die entsprechende Seitenwand durchbricht bzw. durchläuft.

Die Anschlusselemente 2b sind auf der Außenseite des Gehäuses so angeordnet, dass sie die jeweilige Öffnung 2e umlaufen und ein sich in einer der Rohrleitungen befindendes Schüttgut nach Installation der Dosiervorrichtung 1 in das Gehäuse 2 eintreten bzw. aus dem Gehäuse 2 austreten kann.

Der in dem Innenraum 2a angeordnete flexible Schlauch 4 ist so befestigt, dass er die jeweiligen in den Seitenwänden gebildeten Öffnungen 2e miteinander verbindet. Der Fluss des Schüttgutes kann folglich entlang der Längsachse L des flexiblen Schlauches durch die Dosiervorrichtung 1 strömen.

Zur Befestigung dienen eine Befestigungseinrichtung 5, die an der in Figur 2 gezeigten unteren Seitenwand angeordnet ist, und eine weitere Befestigungseinrichtung 5', die an der in Figur 2 gezeigten oberen Seitenwand angeordnet ist. Die genannten Befestigungseinrichtungen 5, 5' werden weiter unten im Detail beschrieben.

Die Figuren 2 und 3a zeigen den flexiblen Schlauch 4 in seinem eingebauten/befestigten Zustand.

Nach bestimmungsgemäßer Installation der Dosiervorrichtung 1 in die bereits genannte und nicht gezeigte Anlage kann das Schüttgut über die jeweiligen Anschlusselemente 2b, die Öffnungen 2e und den flexiblen Schlauch 4 durch die Dosiervorrichtung 1 hindurch geleitet werden.

Die Dosiervorrichtung ist eingerichtet, diesen Fluss des Schüttgutes zu verändern, d. h. entsprechend zu dosieren oder vollständig zu unterbinden. Hierfür beinhaltet die Dosiervorrichtung 1 eine Verformungseinrichtung 6, die beispielsweise zwei verfahrbare Quetschbalken 6a aufweist. Die Quetschbalken 6a sind in sich in X-Richtung befindenden Seitenwänden des Gehäuses 2 verfahrbar gelagert und können jeweils in X-Richtung zur Veränderung des Flusses des Schüttgutes in dem flexiblen Schlauch 4 verfahren werden. Als Antrieb für die Quetschbalken 6a ist auf der Außenseite des Gehäuses 2 jeweils ein Aktuator 6b angeordnet, der eingerichtet ist, den jeweiligen Quetschbalken 6a zu verfahren. In dieser Ausführungsform sind die Aktuatoren jeweils als Pneumatikzylinder ausgebildet.

Bei bestimmungsgemäßem Gebrauch der Dosiervorrichtung 1 strömt das Schüttgut durch den flexiblen Schlauch 4, beispielsweise in Figuren 2 und 3a von oben nach unten. Zur Veränderung des durch den Schlauch 4 strömenden Flusses des Schüttgutes wird die Verformungseinrichtung 6 angesteuert, um die Quetschbalken 6a durch Betätigen der Pneumatikzylinder 6b in Richtung des flexiblen Schlauches 4 zu verfahren. Hierdurch wird der flexible Schlauch 4 durch die Quetschbalken 6a verformt und ein Querschnitt eines Strömungsweges des Flusses des Schüttgutes verringert. Je stärker die Quetschbalken 6a über die Pneumatikzylinder 6b verfahren werden, desto kleiner ist der Querschnitt des Strömungsweges bzw. desto größer ist die Verformung des flexiblen Schlauches, wodurch der Fluss des Schüttgutes in dem Schlauch verringert wird, bis er letztendlich bei maximalem Verfahren der Quetschbalken 6a zum Erliegen kommt.

Der Fluss des Schüttgutes in dem flexiblen Schlauch 4 bzw. die Dosierung des Schüttgutes lässt sich folglich durch das Ansteuern der Verformungseinrichtung steuern.

Die Verformungseinrichtung 6 kann allgemein beliebig ausgestaltet sein, soweit sie ein Verformen des flexiblen Schlauches 4 und damit ein Steuern des Flusses des Schüttgutes bzw. Dosieren des Schüttgutes zulässt.

Der Fluss des Schüttgutes und damit der Grad der Dosierbarkeit des Schüttgutes kann durch eine lediglich bevorzugt vorgesehene Vibrationseinrichtung unterstützt werden. Die Vibrationseinrichtung 7 beinhaltet hierfür einen Vibrator 7a, der eine Schwingung erzeugt. Der Vibrator 7a ist an einer Vibrationsplatte 7b, die in den flexiblen Schlauch 4 bei seiner Herstellung integriert wird, lösbar befestigt und überträgt seine erzeugten Schwingungen über die Vibrationsplatte 7b auf den flexiblen Schlauch 4.

Der flexible Schlauch 4 ist in dem Innenraum 2a über die in Figur 2 gezeigte untere Befestigungseinrichtung 5 und obere, weitere Befestigungseinrichtung 5' befestigt.

Im Folgenden wird die untere Befestigungseinrichtung 5 beschrieben werden, wobei die Ausführungen für die weitere Befestigungseinrichtung 5' entsprechend gelten.

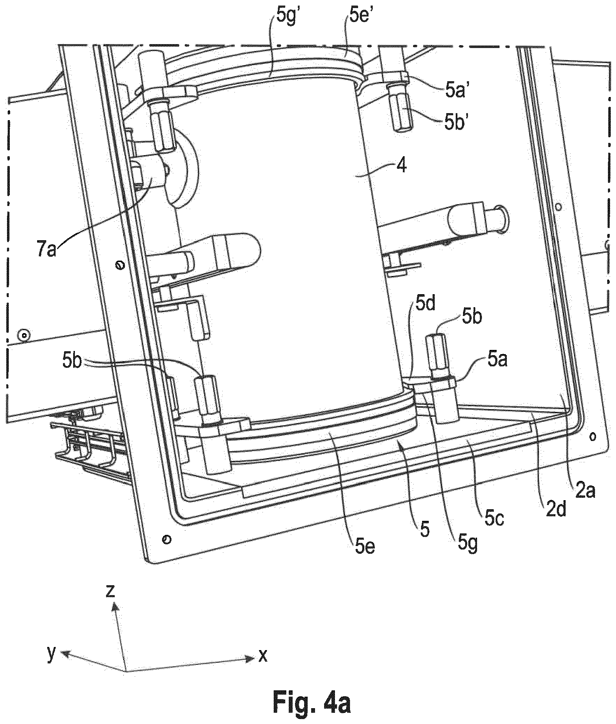

Figur 4a zeigt die Befestigungseinrichtung 5 in einer vergrößerten Darstellung. Die Befestigungseinrichtung 5 beinhaltet ein Klemmelement 5a, das den flexiblen Schlauch 4 über eine bestimmte Länge seines Umfanges um die Längsachse L herum umläuft. Das Klemmelement 5a ist in dieser bevorzugten Ausführungsform eine Klemmplatte.

Eine Verstelleinrichtung 5b der Befestigungseinrichtung 5 haltert das Klemmelement 5a derart, dass es in Richtung der Längsachse des flexiblen Schlauches 4, d. h. in Z-Richtung verstellbar ist. Die Verstelleinrichtung 5b ist in dieser Ausführungsform durch eine Vielzahl von um den flexiblen Schlauch 4 herum angeordneten Spannschraubverbindungen 5b realisiert. Beispielsweise können vier Spannschraubverbindungen 5b vorgesehen sein.

Die Spannschraubverbindungen 5b durchlaufen das Klemmelement 5a und haltern es in einem bestimmten Abstand von der Oberfläche 2d.

Wenn die Spannschraubverbindungen 5b von dem Anwender festgezogen werden, verstellt dies das Klemmelement 5a in Richtung der Oberfläche 2d, sodass das Klemmelement 5a sich dieser Oberfläche annähert. Gleichermaßen kann das Klemmelement 5a wieder rückverstellt werden, indem die Spannschraubverbindungen 5b anschließend gelöst werden.

Die Befestigungseinrichtung 5 kann bevorzugt eine Basisplatte 5c beinhalten, die an der in Figur 4a gezeigten unteren Seitenwand, bevorzugt bündig, befestigt ist und einen Teil der bereits erwähnten in den Innenraum 2a weisenden Oberfläche 2d bildet. Alternativ kann die Befestigungseinrichtung 5 keine Basisplatte aufweisen. In diesem Fall ist die Befestigungseinrichtung über die Verstelleinrichtung direkt an der in Figur 4a gezeigten unteren Seitenwand des Gehäuses 2, die die in den Innenraum weisende Oberfläche 2d bildet, befestigt.

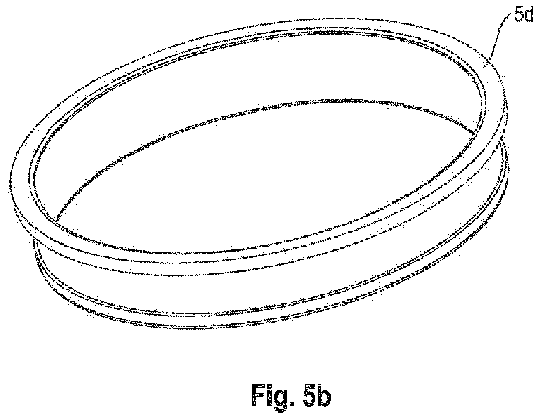

Die Befestigungseinrichtung 5 beinhaltet ferner einen Trägerring 5d, an dem der flexible Schlauch 4 befestigt ist. Der Trägerring 5d ist bevorzugt ein geschlossener Ring und umläuft den flexiblen Schlauch 4 vollständig. Der Trägerring ist in Figur 5b in einer perspektivischen Darstellung gezeigt.

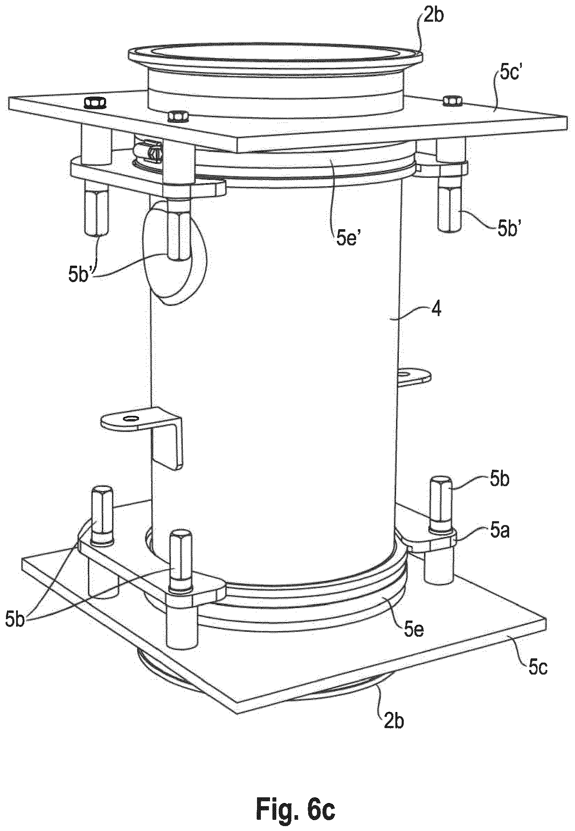

Der flexible Schlauch 4 wird an dem Trägerring 5d befestigt, indem er durch den Trägerring geführt, anschließend über eine Stirnseite des Trägerringes geschlagen und mittels eines Spannbandes 5e an seine in Figur 4a radial nach außen weisende Fläche gedrückt wird. Das Spannband 5 wird bevorzugt durch Drehen einer Spannschraube 5f, wie sie beispielsweise in Figur 6c in Bezug auf die dort gezeigte obere, weitere Befestigungseinrichtung 5' dargestellt ist.

Das Anschließen bzw. Befestigen des mit dem Trägerring 5e verbundenen flexiblen Schlauches 4 in dem Innenraum 2a des Gehäuses 2 gestaltet sich wie folgt.

Zuerst löst der Anwender das Klemmelement 5a, sodass es sich in seinem rückverstellten bzw. gelösten Zustand befindet.

Anschließend werden der flexible Schlauch 4 und der Trägerring 5d zusammen in den Innenraum 2a des Gehäuses eingebracht und der Trägerring 5d von der geöffneten Vorderseite des Gehäuses 2 aus in einen Zwischenraum, der sich in Richtung der Längsachse L zwischen dem Klemmelement 5a und der in den Innenraum 2a des Gehäuses 2 weisenden Oberfläche 2d befindet, eingeführt. Damit dies gelingt, ist das Klemmelement 5a in Bezug auf seinen Umfang nicht geschlossen und beinhaltet einen Durchbruch 5f, der in Richtung der Seite des Gehäuses 2 ausgerichtet ist, von der aus der Innenraum 2a zugänglich ist. D.h. der Durchbruch 5f weist in Richtung der Vorderseite des Gehäuses 2, wie in Figur 4a gezeigt.

Das Klemmelement 5a hat auf seiner der Oberfläche 2a zugewandten Seite eine Nut 5g, die auf einer dem flexiblen Schlauch 4 radialzugewandten Seite den flexiblen Schlauch 4 umläuft.

Der Trägerring 5d ist in die Nut 5g nach Einbringen in den vorgenannten Zwischenraum formschlüssig eingesetzt. Die Nut 5g bildet allgemein ausgedrückt zusammen mit dem Trägerring 5d Formschlussstrukturen aus. Das formschlüssige Ineinandersetzen des Trägerrings 5d und des Klemmelements 5a hat zur Folge, dass der Trägerring 5d in Bezug auf die Öffnung 2e, die durch die in den Innenraum 2a weisende Oberfläche festgelegt wird bzw. die entsprechende Seitenwand des Gehäuses 2 durchläuft, zentriert ist. Insbesondere sind der Trägerring 5d und die Öffnung 2e koaxial ausgerichtet.

Anschließend betätigt der Anwender die Verstelleinrichtung 5b derart, dass das Klemmelement 5a in Richtung der Öffnung 2e versetzt wird. Die Abmessungen des Trägerrings 5d in Richtung der Längsachse L sind so bemessen, dass hierdurch die Stirnseite des Trägerrings 5d, über die der flexible Schlauch 4 geschlagen ist, den flexiblen Schlauch 4 an die in den Innenraum 2a des Gehäuses 2 weisende Oberfläche andrückt. Der flexible Schlauch 4 dichtet ab gegenüber der in den Innenraum 2a des Gehäuses weisenden Oberfläche, sodass das durch den flexiblen Schlauch 4 fließende Schüttgut nicht in den Innenraum 2a des Gehäuses 2 gelangt.

Der Durchmesser des Trägerrings 5a ist so bemessen, dass der flexible Schlauch 4 nach Verstellen der Verstelleinrichtung 5b bündig mit einem die Öffnung 2e festlegenden Rand der Oberfläche abschließt.

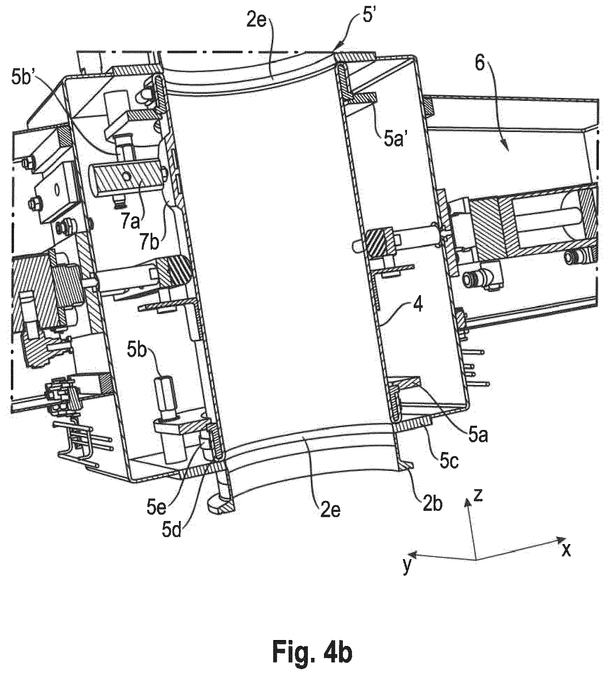

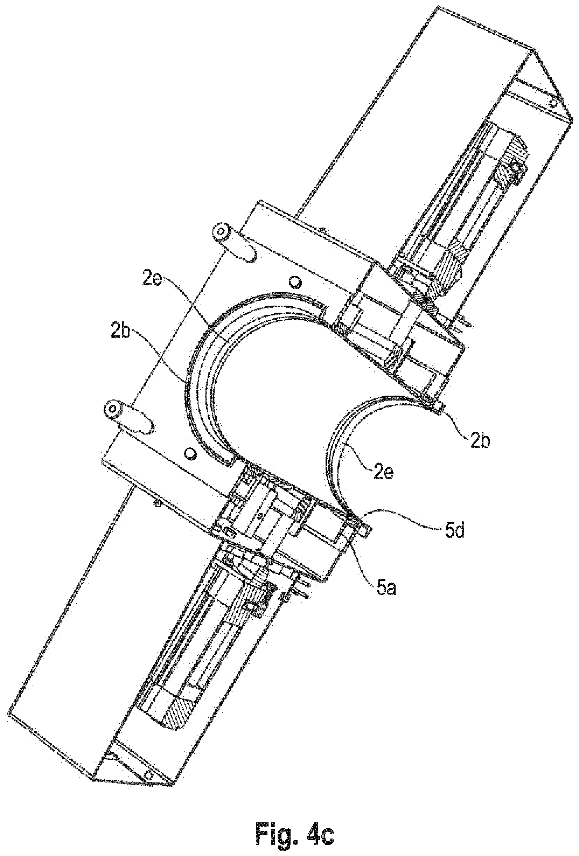

Figur 4b zeigt eine Schnittansicht der Dosiervorrichtung 1, wobei die Schnittebene der X-Z-Ebene des in Figur 4a gezeigten Koordinatensystems entspricht. Figur 4c zeigt die Position der in Figur 4b gewählten Schnittebene in Bezug auf die Y-Achse, wobei die Dosiervorrichtung 1 in Figur 4c von oben betrachtet ist.

Wie aus Figur 4b ersichtlich ist sitzt der Trägerring 5d mit seiner dem Klemmelement 5a zugewandten Stirnseite radial zur Längsachse L formschlüssig in der Nut 5g und drückt mit seiner der Öffnung 2e zugewandten Stirnseite den flexiblen Schlauch 4 an die in den Innenraum 2a weisende Oberfläche so an, dass der flexible Schlauch 4 bündig mit dem die Öffnung 2e festlegenden Rand der Oberfläche abschließt. Durch den bündigen Abschluss werden Ablagerungen des Schüttgutes verhindert.

Die weitere Befestigungseinrichtung 5', über die der flexible Schlauch 4 in Figuren 4a und 4b an der oberen, gegenüberliegenden Seite befestigt wird, ist bevorzugt identisch zu der im Vorhergehenden erläuterten Befestigungseinrichtung 5 ausgebildet. Entsprechende Teile tragen äquivalente Bezugszeichen, die um ein " ' " ergänzt sind, und werden nicht nochmals erläutert. D. h. der flexible Schlauch wird an die obere, weitere Oberfläche der oberen Seitenwand des Gehäuses 2 durch das Zusammenwirken des Klemmelements 5a', des Trägerrings 5g', des Spannbandes 5e' und der Verstelleinrichtung 5b' gedrückt, sodass der flexible Schlauch 4 gegenüber der oberen Öffnung 2e zentriert ist.

Die Länge des flexiblen Schlauches ist in Richtung seiner Längsachse L so bemessen, dass er mit Verstellen der Verstelleinrichtung 5b, 5b' gespannt wird. Anders ausgedrückt übernimmt die Befestigungseinrichtung 5 auch die entsprechende Spannfunktion des flexiblen Schlauches 4.

Wie bereits erwähnt sind beide Befestigungseinrichtungen 5, 5' bevorzugt identisch ausgebildet. Es ist allerdings möglich, dass der flexible Schlauch 4 an einer der Seitenwände mit einer konventionellen Befestigungseinrichtung befestigt wird und an der gegenüberliegenden Seitenwand mit der erfindungsgemäßen Befestigungseinrichtung 5, 5'.

Die Handhabung der Dosiereinrichtung 1 ist gegenüber dem Stand der Technik stark vereinfacht. Für den Einbau bzw. Wechsel des flexiblen Schlauches 4 ist es lediglich notwendig für den Anwender, die Verstelleinrichtung 5b zu betätigen, derart, dass das Klemmelement 5a rückverstellt bzw. gelöst wird. Anschließend lässt sich der flexible Schlauch 4 zusammen mit dem Trägerring 5d je nachdem, ob es sich um den Einbau oder die Entnahme des flexiblen Schlauches 4 handelt, einsetzen oder entnehmen.

Das Klemmelement 5 muss aufgrund des Durchbruches 5f nicht vollständig gelöst werden, sondern kann an Ort und Stelle nach Betätigen der Verstelleinrichtung 5b verbleiben.

Außerdem sind keine Handgriffe/Tätigkeiten für den Anwender außerhalb des Gehäuses 2, wie beispielsweise das Lösen von Schrauben auf der Außenseite des Gehäuses 2, notwendig, um den flexiblen Schlauch 4 ein- oder auszubauen. Anders ausgedrückt werden alle für den Einbau und/oder Ausbau des flexiblen Schlauches 4 notwendigen Tätigkeiten in dem Innenraum 2a des Gehäuses 2 durchgeführt. Diese Tatsache ermöglicht es zudem, die Anschlusselemente 2b frei auszugestalten und den Einbauort der Dosiervorrichtung 1 frei wählen zu können, weil keine bestimmten Bereiche einer Außenoberfläche des Gehäuses 2 für den Wechsel des flexiblen Schlauches 4 zwangsläufig zugänglich bleiben müssen.

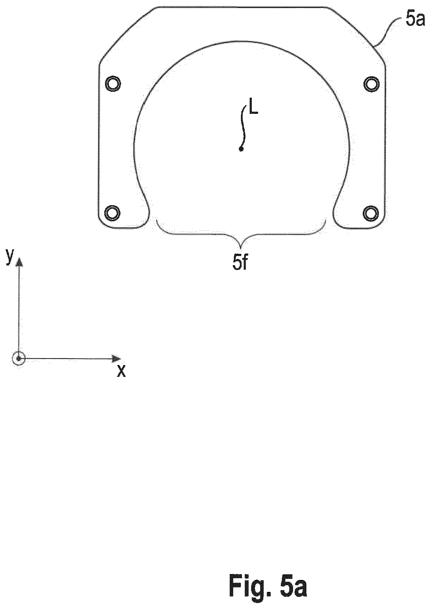

Figur 5a zeigt das Klemmelement 5a in einer Draufsicht von oben in Richtung der Längsachse L des nicht gezeigten flexiblen Schlauches 4. Die Z-Achse des in den Figuren verwendeten Koordinatensystems steht in Figur 5a folglich senkrecht zur Zeichenebene.

Der radial zur Längsachse L verlaufende Durchbruch 5f des Klemmelementes 5a weist nach bestimmungsgemäßem Einbau in Richtung der Vorderseite des Gehäuses 2, wie es aus den vorhergehenden Erläuterungen zusammen mit den entsprechenden Figuren hervorgeht. Der Durchbruch 5f ist in seinen Abmessungen so bemessen, dass er einen Bereich betrifft, der kleiner ist als der halbe Umfang des flexiblen Schlauches 4. Anders ausgedrückt umläuft das Klemmelement 5a nach Befestigung des flexiblen Schlauches 4 diesen um mehr als seinen halben Umfang.

Insbesondere wird hierdurch erreicht, dass die Formschlussstrukturen, die bevorzugt durch die Abmessungen der Nut 5g und der dem Klemmelement 5a zugewandten Stirnseite des Trägerrings 5d realisiert sind, den Trägerring 5d und die jeweilige Öffnung 2e zueinander zentrieren.

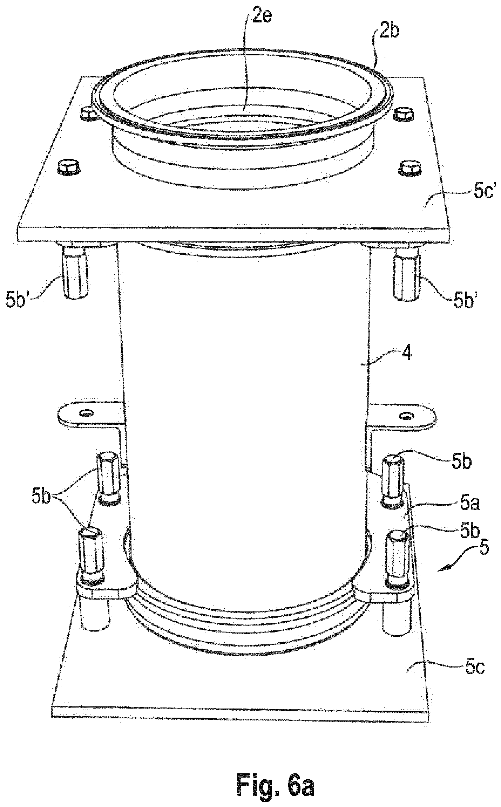

Die Erfindung ist nicht auf die im Vorhergehenden erläuterte Dosiervorrichtung 1 beschränkt. Die Befestigungseinrichtung 5 kann auch dazu dienen, Rohrleitungen über den flexiblen Schlauch 4 miteinander zu verbinden. Hierfür kann die Verbindungsvorrichtung, wie sie in Figur 6a bis 6e gezeigt ist, dienen, wobei der Aufbau der Verbindungsvorrichtung mit der Struktur zur Befestigung des flexiblen Schlauches in der im Vorhergehenden erläuterten Dosiervorrichtung 1 identisch ist, d.h. das Gehäuse 2 und die Verformungseinrichtung 6 sind entbehrlich.

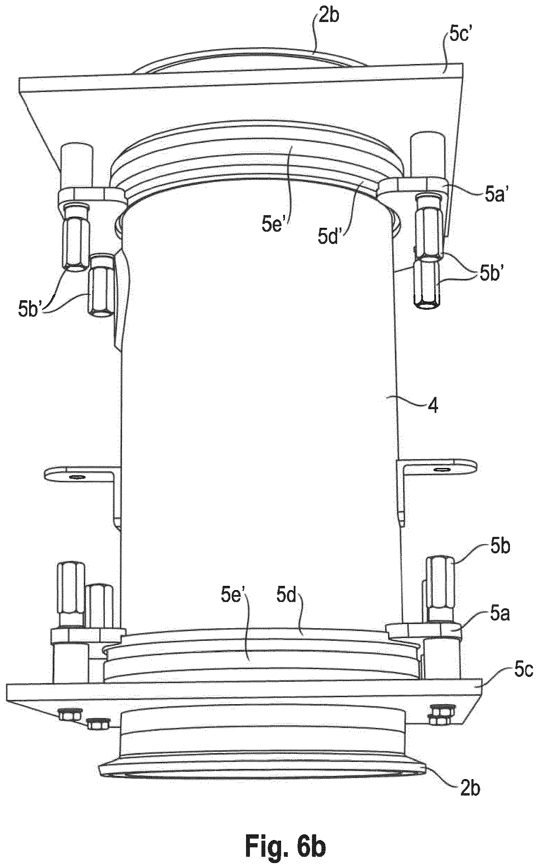

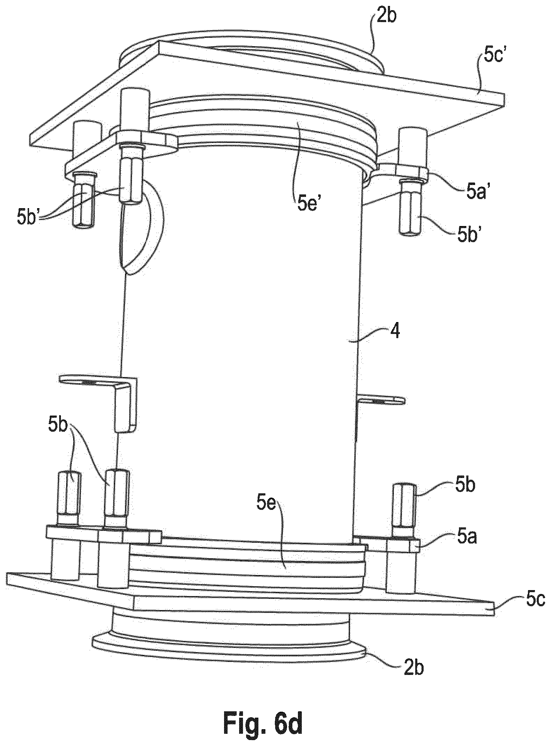

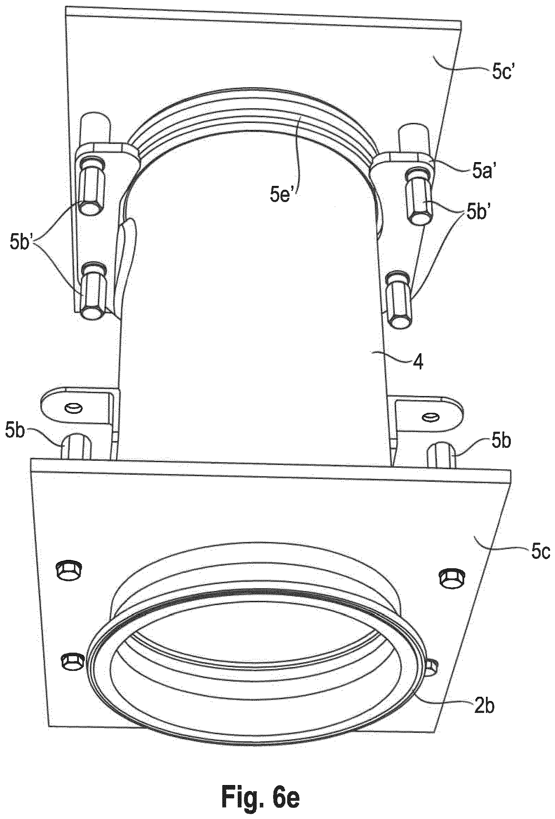

Insoweit kann auf die vorhergehenden Ausführungen verwiesen werden. Außerdem kann auch bei der in Figur 6 gezeigten Verbindungsvorrichtung nur eine Seite des flexiblen Schlauches 4 durch die Befestigungseinrichtung 5 befestigt sein und die andere Seite über eine konventionelle Befestigungseinrichtung.

## Patentansprüche

1. Vorrichtung (1) zur Veränderung eines bei bestimmungsgemäßem Gebrauch durch einen flexiblen Schlauch (4) strömenden Flusses eines Schüttgutes, wobei die Vorrichtung aufweist:
- eine Befestigungseinrichtung (5, 5') zur Befestigung des flexiblen Schlauches; und
- eine Verformungseinrichtung (6), die derart angeordnet und betätigbar ist, dass sie zu der Veränderung des in einer Richtung einer Längsachse (L) des flexiblen Schlauches (4) strömenden Flusses des Schüttgutes den flexiblen Schlauch (4) radial zu der Längsachse (L) verformt;
wobei
die Befestigungseinrichtung (5, 5') ein verstellbares Klemmelement (5a) beinhaltet, das geeignet ist, den flexiblen Schlauch (4) um die Längsachse (L) herum zu umlaufen und das einen zu der Längsachse (L) radial verlaufenden Durchbruch (5f) aufweist; und wobei durch ein Verstellen des Klemmelements (5a) der flexible Schlauch (4) (i) an eine eine Öffnung (2e) festlegende Oberfläche (2d) der Vorrichtung derart dichtend angedrückt werden kann, dass der Fluss des Schüttgutes durch die Öffnung (2e) strömen kann, und (ii) anschließend durch ein Rückverstellen des Klemmelements (5a) von der Öffnung (2e) wieder gelöst werden kann; und
nach Lösen des flexiblen Schlauches (4) von der Oberfläche (2d) der flexible Schlauch (4) entfernt werden kann, indem er radial zu der Längsachse (L) durch den Durchbruch (5f) gezogen wird, wobei
die Befestigungseinrichtung (5, 5') einen den flexiblen Schlauch (4) umlaufenden Trägerring (5d) beinhaltet, an dem der flexible Schlauch (4) befestigbar ist und an dem das Klemmelement (5a), bevorzugt unmittelbar, anliegt; und
das Klemmelement (5a) bei dem Verstellen den flexiblen Schlauch (4) über den Trägerring (5d) an die Oberfläche (2d) andrücken kann und wobei der flexible Schlauch (4) über den Trägerring (5d) derart geschlagen werden kann, dass eine in Richtung der Oberfläche weisende Stirnseite des Trägerrings (5d) an dem flexiblen Schlauch (4) anliegen kann; und das Klemmelement (5a), bevorzugt unmittelbar, an einer der Stirnseite abgewandten Stirnseite des Trägerrings (5d) anliegt; und das Klemmelement (5a) bei dem Verstellen derart auf den Trägerring (5d) wirkt, dass die Stirnseite den flexiblen Schlauch (4) an die Oberfläche (2d) drücken kann.

2. Vorrichtung (1) gemäß Patentanspruch 1, wobei der flexible Schlauch (4) an dem Trägerring (5d) befestigbar ist, indem der über den Trägerring (5d) geschlagene Teil des flexiblen Schlauches (4) durch ein Spannmittel an eine in Bezug auf die Längsachse (L) radial nach außen weisende Fläche des Trägerrings (5d) gedrückt werden kann.

3. Vorrichtung (1) gemäß Patentanspruch 2, wobei
das Klemmelement (5a) und der Trägerring (5d) Formschlussstrukturen aufweisen, die derart angeordnet sind, dass nach ineinander Einsetzen der Formschlussstrukturen der flexible Schlauch (4) und die Öffnung (2e) zueinander zentrierbar sind.

4. Vorrichtung (1) gemäß Patentanspruch 3, wobei
der flexible Schlauch (4) und ein die Öffnung (2e) festlegender Rand der Oberfläche (2d) miteinander bündig sind, wenn die Formschlussstrukturen ineinander eingerastet sind und der flexible Schlauch (4) durch das Verstellen an die Oberfläche (2d) angedrückt ist.

5. Vorrichtung (1) gemäß einem der vorhergehenden Patentansprüche 1 bis 4, wobei das Klemmelement (5a) den flexiblen Schlauch (4) um die Längsachse (L) herum über eine Länge umlaufen kann, die größer ist als eine halbe Umfangslänge des flexiblen Schlauches(4).

6. Vorrichtung (1) gemäß Patentanspruch 5, wobei
eine Abmessung des in dem Klemmelement (5a) gebildeten Durchbruchs in Bezug auf den Umfang des flexiblen Schlauchs (4) kleiner ist als 1/2, 1/3, 1/4, 1/5, 1/6, 1/7, 1/8 oder 1/9 des Umfangs des flexiblen Schlauchs (4).

7. Vorrichtung (1) gemäß einem der vorhergehenden Patentansprüche, wobei
das Klemmelement (5a) eine Klemmplatte ist, die als die Formschlussstrukturen eine in Richtung der Öffnung (2e) weisende, den flexiblen Schlauch (4) umlaufende Nut (5g) aufweist, in die der Trägerring (5d) eingesetzt ist.

8. Vorrichtung (1) gemäß einem der vorhergehenden Patentansprüche, wobei
die Befestigungseinrichtung (5, 5') eine Verstelleinrichtung (5b) zu dem Verstellen des Klemmelements (5a) aufweist und die Verstelleinrichtung (5b) durch einen Anwender derart betätigt werden kann, dass der flexible Schlauch (4) an die Oberfläche (2d) gedrückt oder von dieser gelöst werden kann.

9. Vorrichtung (1) gemäß Patentanspruch 8, wobei
durch das Betätigen der Verstelleinrichtung (5b) das Klemmelement (5a) in Richtung der Längsachse (L) versetzt wird.

10. Vorrichtung (1) gemäß Patentanspruch 9, wobei
die Verstelleinrichtung (5b) eine Vielzahl voneinander unabhängig betätigbare Verstellelemente aufweist.

11. Vorrichtung (1) gemäß einem der vorhergehenden Patentansprüche, weiterhin aufweisend:
ein Gehäuse (2), in dem der flexible Schlauch (4) und die Befestigungseinrichtung (5, 5') angeordnet werden können; wobei
die Oberfläche (2d) eine in einen Innenraum (2a) des Gehäuses (2) weisende Oberfläche ist und die Öffnung (2e) eine die in den Innenraum weisende Oberfläche (2d) festlegende Gehäusewand nach Außen durchläuft; und
die Befestigungseinrichtung (5, 5') die Verstelleinrichtung (5b) aufweist, die bestimmungsgemäß in dem Innenraum (2a) des Gehäuses (2) durch den Anwender betätigt wird.

12. Vorrichtung (1) gemäß Patentanspruch 11, weiterhin aufweisend:
eine weitere Befestigungseinrichtung (5'), die in dem Innenraum (2a) des Gehäuses (2) an einer weiteren der Oberfläche des Gehäuses (2) gegenüberliegenden Oberfläche angeordnet ist, wobei der flexible Schlauch (4) an der weiteren Befestigungseinrichtung (5') derart befestigt werden kann, dass der Fluss des Schüttgutes durch eine weitere durch die gegenüberliegende Oberfläche festgelegte, weitere Öffnung (2e') strömen kann; wobei
die Länge des flexiblen Schlauches (4) so bemessen werden kann, dass er, wenn das Klemmelement (5a) den flexiblen Schlauch (4) an die Oberfläche (2d) drückt, zwischen der Befestigungseinrichtung (5) und der weiteren Befestigungseinrichtung (5) in dem Innenraum (2a) gespannt ist.

13. Vorrichtung (1) gemäß Patentanspruch 12, wobei das Gehäuse (2) zum Entfernen des flexiblen Schlauches (4) von einer Seite aus für den Anwender zugänglich ist und der Durchbruch (5f) des Klemmelements (5a) in Richtung der Seite weist.

14. Vorrichtung (1) gemäß Patentanspruch 12, wobei
die Befestigungseinrichtung (5) und die weitere Befestigungseinrichtung (5') gleich ausgebildet sind.

## Claims

1. A device (1) for changing a flow of a bulk material flowing through a flexible tube (4), in accordance with the intended use, the device comprising:
- an attachment means (5, 5') for attaching the flexible tube; and
- a deforming means (6) arranged and operable to deform the flexible tube (4) radially to a longitudinal axis (L) to change the flow of the bulk material flowing in a direction of the longitudinal axis (L) of the flexible tube (4);
wherein
the attachment means (5, 5') includes an adjustable clamping member (5a) which is adapted for encircling the flexible tube (4) about the longitudinal axis (L) and which has an aperture (5f) extending radially with respect to the longitudinal axis (L);
and wherein
by adjusting the clamping member (5a), the flexible tube (4) (i) can be pressed against a surface (2d) defining an opening (2e) of the device in a sealing manner such that the flow of the bulk material can pass through the opening (2e), and (ii) can subsequently be released from the opening (2e) by readjusting the clamping member (5a); and
after detaching the flexible tube (4) from the surface (2d), the flexible tube (4) can be removed by pulling it radially to the longitudinal axis (L) through the aperture (5f), wherein
the attachment means (5, 5') includes a carrier ring (5d) which surrounds the flexible tube (4) and to which the flexible tube (4) is attachable and against which the clamping element (5a) bears, preferably directly; and
the clamping member (5a) can press the flexible tube (4) against the surface (2d) via the carrier ring (5d) during the adjustment, and wherein
the flexible tube (4) can be wrapped over the carrier ring (5d) in such a way that an end face of the carrier ring (5d) facing in the direction of the surface can bear against the flexible tube (4); and
the clamping member (5a) bears, preferably directly, against an end face of the carrier ring (5d) opposite the end face; and
the clamping member (5a) acts on the carrier ring (5d) during adjustment in such a way that the end face can press the flexible tube (4) against the surface (2d).

2. Device (1) according to claim 1, wherein
the flexible tube (4) can be attached to the carrier ring (5d) by pressing the part of the flexible tube (4) which is wrapped over the carrier ring (5d) against a surface of the carrier ring (5d) which faces radially outwards with respect to the longitudinal axis (L) by a clamping means.

3. Device (1) according to claim 2, wherein
the clamping member (5a) and the carrier ring (5d) comprise form-fit structures which are arranged in such a way that, after insertion of the form-fit structures into one another, the flexible tube (4) and the opening (2e) can be centered relative to one another.

4. Device (1) according to claim 3, wherein
the flexible tube (4) and an edge of the surface (2d) defining the opening (2e) are aligned with each other when the form-fit structures are engaged and the flexible tube (4) is pressed against the surface (2d) by the adjustment.

5. Device (1) according to any one of preceding claims 1 to 4, wherein the clamping member (5a) is capable of encircling the flexible tube (4) about the longitudinal axis (L) for a length greater than half a circumferential length of the flexible tube (4).

6. Device (1) according to claim 5, wherein
a dimension of the aperture formed in the clamping member (5a) with respect to the circumference of the flexible tube (4) is smaller than 1/2, 1/3, 1/4, 1/5, 1/6, 1/7, 1/8, or 1/9 of the circumference of the flexible tube (4).

7. Device (1) according to any one of the preceding claims, wherein
the clamping member (5a) is a clamping plate which, as the form-fit structures, has a groove (5g) facing in the direction of the opening (2e) and surrounding the flexible tube (4), into which groove the carrier ring (5d) is inserted.

8. Device (1) according to any one of the preceding claims, wherein
the attachment means (5, 5') comprises adjusting means (5b) for adjusting the clamping member (5a), and the adjusting means (5b) can be operated by a user in such a way that the flexible tube (4) is pressed against the surface (2d) or can be released therefrom.

9. Device (1) according to claim 8, wherein
the clamping member (5a) is displaced in the direction of the longitudinal axis (L) by operating the adjusting means (5b).

10. Device (1) according to claim 9, wherein
the adjustment means (5b) comprises a plurality of independently operable adjustment members.

11. Device (1) according to any one of the preceding claims, further comprising:
a housing (2) in which the flexible tube (4) and the attachment means (5, 5') can be arranged; wherein
the surface (2d) is a surface facing into an interior space (2a) of the housing (2) and the opening (2e) passes outwardly through a housing wall defining the surface (2d) facing into the interior space; and
the attachment means (5, 5') comprises the adjusting means (5b) which is operated as intended in the interior (2a) of the housing (2) by the user.

12. Device (1) according to claim 11, further comprising:
a further attachment means (5') arranged in the inner space (2a) of the housing (2) at a further surface opposite to the surface of the housing (2), wherein the flexible tube (4) can be attached to the further attachment means (5') in such a way that the flow of the bulk material can pass through a further further opening (2e') defined by the opposite surface; wherein
the length of the flexible tube (4) can be dimensioned such that, when the clamping member (5a) presses the flexible tube (4) against the surface (2d), it is tensioned between the attachment means (5) and the further attachment means (5) in the interior space (2a).

13. Device (1) according to claim 12, wherein the housing (2) for removing the flexible tube (4) is accessible to the user from one side and the aperture (5f) of the clamping member (5a) faces in the direction of said side.

14. Device (1) according to claim 12, wherein
the attachment means (5) and the further attachment means (5') are of identical design.

## Revendications

1. Dispositif (1) pour la modification d'un flux d'un produit en vrac s'écoulant à travers un tuyau flexible (4) lors d'une utilisation conforme à l'usage prévu, dans lequel le dispositif présente :
- un système de fixation (5, 5') pour la fixation du tuyau flexible ; et
- un système de déformation (6), qui est disposé et peut être actionné de telle sorte que pour la modification du flux du produit en vrac s'écoulant dans une direction d'un axe longitudinal (L) du tuyau flexible (4) il déforme le tuyau flexible (4) radialement par rapport à l'axe longitudinal (L) ;
dans lequel
le système de fixation (5, 5') comporte un élément de serrage (5a) déplaçable, qui est adapté à faire le tour du tuyau flexible (4) autour de l'axe longitudinal (L) et qui présente une percée (5f) s'étendant radialement par rapport à l'axe longitudinal (L) ;
et dans lequel
par un déplacement de l'élément de serrage (5a) le tuyau flexible (4) (i) peut être pressé de manière étanche sur une surface (2d) du dispositif définissant une ouverture (2e), de telle sorte que le flux du produit en vrac peut s'écouler à travers l'ouverture (2e), et (ii) ensuite par un déplacement de retour de l'élément de serrage (5a) peut être à nouveau enlevé de l'ouverture (2e) ; et
après enlèvement du tuyau flexible (4) de la surface (2d) le tuyau flexible (4) peut être retiré, du fait qu'il est tiré radialement par rapport à l'axe longitudinal (L) à travers la percée (5f), dans lequel
le système de fixation (5, 5') comporte une bague de support (5d) faisant le tour du tuyau flexible (4), sur laquelle le tuyau flexible (4) peut être fixé et sur laquelle l'élément de serrage (5a) s'applique, de préférence directement ; et
l'élément de serrage (5a) lors du déplacement peut presser le tuyau flexible (4) par l'intermédiaire de la bague de support (5d) sur la surface (2d) et dans lequel le tuyau flexible (4) peut être frappé au-dessus de la bague de support (5d), de telle sorte qu'une face frontale de la bague de support (5d) orientée en direction de la surface peut s'appliquer sur le tuyau flexible (4) ;
et l'élément de serrage (5a) s'applique, de préférence directement, sur une face frontale de la bague de support (5d) opposée à la face frontale ; et
l'élément de serrage (5a) lors du déplacement agit sur la bague de support (5d), de telle sorte que la face frontale peut presser le tuyau flexible (4) sur la surface (2d).

2. Dispositif (1) selon la revendication 1, dans lequel
le tuyau flexible (4) peut être fixé sur la bague de support (5d), du fait que la partie du tuyau flexible (4) frappée au-dessus de la bague de support (5d) peut être pressée par un moyen de tension sur une surface de la bague de support (5d) orientée radialement vers l'extérieur par rapport à l'axe longitudinal (L).

3. Dispositif (1) selon la revendication 2, dans lequel
l'élément de serrage (5a) et la bague de support (5d) présentent des structures à coopération de formes, qui sont disposées de telle sorte qu'après l'insertion l'une dans l'autre des structures à coopération de formes, le tuyau flexible (4) et l'ouverture (2e) peuvent être centrés l'un par rapport à l'autre.

4. Dispositif (1) selon la revendication 3, dans lequel
le tuyau flexible (4) et un bord de la surface (2d) définissant l'ouverture (2e) sont à fleur l'un avec l'autre, lorsque les structures à coopération de formes sont encliquetées les unes dans les autres et le tuyau flexible (4) est pressé sur la surface (2d) par le déplacement.

5. Dispositif (1) selon l'une quelconque des revendications précédentes 1 à 4, dans lequel l'élément de serrage (5a) peut faire le tour du tuyau flexible (4) autour de l'axe longitudinal (L) sur une longueur qui est supérieure à une demi-longueur périphérique du tuyau flexible (4).

6. Dispositif (1) selon la revendication 5, dans lequel
une mesure de la percée formée dans l'élément de serrage (5a) par rapport à la périphérie du tuyau flexible (4) est inférieure à 1/2, 1/3, 1/4, 1/5, 1/6, 1/7, 1/8 ou 1/9 de la périphérie du tuyau flexible (4).

7. Dispositif (1) selon l'une quelconque des revendications précédentes, dans lequel
l'élément de serrage (5a) est une plaque de serrage, qui présente en tant que structures à coopération de formes une rainure (5g) orientée en direction de l'ouverture (2e), faisant le tour du tuyau flexible (4), dans laquelle la bague de support (5d) est insérée.

8. Dispositif (1) selon l'une quelconque des revendications précédentes, dans lequel
le système de fixation (5, 5') présente un système de déplacement (5b) pour le déplacement de l'élément de serrage (5a) et le système de déplacement (5b) peut être actionné par un utilisateur, de telle sorte que le tuyau flexible (4) peut être pressé sur la surface (2d) ou enlevé de celle-ci.

9. Dispositif (1) selon la revendication 8, dans lequel
par l'actionnement du système de déplacement (5b), l'élément de serrage (5a) est décalé en direction de l'axe longitudinal (L).

10. Dispositif (1) selon la revendication 9, dans lequel
le système de déplacement (5b) présente une pluralité d'éléments de déplacement pouvant être actionnés indépendamment les uns des autres.

11. Dispositif (1) selon l'une quelconque des revendications précédentes, présentant en outre :
un boîtier (2), dans lequel le tuyau flexible (4) et le système de fixation (5, 5') peuvent être disposés ;
dans lequel
la surface (2d) est une surface orientée dans un espace intérieur (2a) du boîtier (2) et l'ouverture (2e) traverse vers l'extérieur une paroi de boîtier définissant la surface (2d) orientée dans l'espace intérieur ; et
le système de fixation (5, 5') présente le système de déplacement (5b), qui est actionné par l'utilisateur conformément à l'usage prévu dans l'espace intérieur (2a) du boîtier (2).

12. Dispositif (1) selon la revendication 11, présentant en outre :
un autre système de fixation (5'), qui est disposé dans l'espace intérieur (2a) du boîtier (2)sur une autre surface opposée à la surface du boîtier (2), dans lequel le tuyau flexible (4) peut être fixé sur l'autre système de fixation (5'), de telle sorte que le flux du produit en vrac peut s'écouler à travers une autre ouverture (2e') définie par la surface opposée ; dans lequel
la longueur du tuyau flexible (4) peut être dimensionnée de sorte que, lorsque l'élément de serrage (5a) presse le tuyau flexible (4) sur la surface (2d), il est tendu dans l'espace intérieur (2a) entre le système de fixation (5) et l'autre système de fixation (5) .

13. Dispositif (1) selon la revendication 12,
dans lequel le boîtier (2) est accessible à l'utilisateur à partir d'une face pour le retrait du tuyau flexible (4) et la percée (5f) de l'élément de serrage (5a) est orientée en direction de la face.

14. Dispositif (1) selon la revendication 12, dans lequel
le système de fixation (5) et l'autre système de fixation (5') sont réalisés de la même façon.
